# EUROPÄISCHE PATENTSCHRIFT

(11) **EP 2 423 518 B1**
(45) Veröffentlichungstag und Bekanntmachung des Hinweises auf die Patenterteilung: **02.07.2014**
(21) Anmeldenummer: 11006741.0
(22) Anmeldetag: 18.08.2011
(51) Int. Cl.: F16B 19/14, F16B 5/04

(54) **Verfahren zur Herstellung einer Nagelverbindung zwischen wenigstens zwei Fügeteilen**
Method for producing a nail connection between two joint parts
Procédé de fabrication d'une liaison par clous entre au moins deux éléments d'assemblage

(30) Priorität: 31.08.2010 DE 102010035950
(43) Veröffentlichungstag der Anmeldung: 29.02.2012
(73) Patentinhaber: Audi AG, 85045 Ingolstadt (DE)
(72) Erfinder: Hußmann, Dominik, Dr., 85110 Kipfenberg (DE); Schlegelmilch, Robert, 98529 Suhl (DE)
(74) Vertreter: Patzelt, Heike Anna Maria

(56) Entgegenhaltungen:
- WO-A1-2006/019786
- AU-B2- 486 273
- DE-A1- 4 339 840
- FR-A1- 2 610 375

## Beschreibung

Die Erfindung betrifft ein Verfahren zur Herstellung einer Nagelverbindung zwischen wenigstens zwei Fügeteilen gemäß Oberbegriff des Patentanspruchs 1.

Aus der DE 10 2006 002 238 A1 ist ein solches Verfahren bekannt, das einen Nagel verwendet, der einen Nagelkopf mit einer an der Kopfunterseite vorgesehenen Ringnut, einen Nagelschaft und eine Nagelspitze aufweist. Zur Herstellung einer Nagelverbindung zwischen wenigstens zwei ungelochten Fügeteilen wird der Nagel mittels eines Setzgerätes mit hoher Geschwindigkeit im Fügebereich in die Fügeteile im Wesentlichen drehungsfrei axial so eingetrieben, dass die Nagelspitze und der Nagelschaft in die Fügeteile eindringen, bis der Nagelkopf an der Oberseite des Fügeteils aufliegt und hierbei an der Oberseite des Fügeteils ein Materialaufwurf gebildet wird, der in die Ringnut an der Kopfunterseite des Nagels vorsteht, sowie im nagelkopfabgewandten Fügeteil an dessen Unterseite ein kraterförmiger Materialauswurf gebildet wird, der in nagelkopfabgewandter Richtung vorsteht.

Dieses als Hochgeschwindigkeitsfügen bekannte Verfahren weist jedoch eine Reihe von Nachteilen auf, die dessen Einsatzbereich nicht unerheblich einschränken. Wird bspw. eine Nagelverbindung zwischen zwei ungelochten Fügeteilen hergestellt, bei der das nagelkopfseitige Fügeteil aus einem spröden Werkstoff, wie bspw. faserverstärkten Kunststoff oder Gusswerkstoff besteht, sind negative Folgen sowohl hinsichtlich der Festigkeit des verwendeten Werkstoffes, der Fügequalität, des Versagensverhaltens als auch hinsichtlich des Korrosionsverhaltens festzustellen, da bspw. bei einem faserverstärkten Kunststoff durch den eingetriebenen Nagel die Fasern zerschnitt und zerstört werden.

Auch ist dieses Verfahren beim Fügen von vorgelochten Fügeteilen nicht ohne weiteres einsetzbar, da oftmals der Durchmesser des Vorlochs zu groß ist. Ein Vorloch steht bspw. fertigungsbedingt zur Verfügung oder dann, wenn im Reparaturfall ein Verbindungsmittel, wie bspw. eine Schraube, ein Niet oder dgl. entfernt werden muss.

Der Vollständigkeit halber sei auf die WO 2006/019786 A1 verwiesen, die eine Nagelführungshülse zur Montage von Gipskartonplatten an Wandpfosten beschreibt. Diese Nagelführungshülse wird zusammen mit einem Nagel oder einer Schraube soweit in den Gipskartonplatte eingetrieben, bis die Nagelführungshülse an dem Wandpfosten anliegt und damit als Abstandshalter für den eingetriebenen Nagel oder die eingeschraubte Schraube dient.

Ferner wird in der AU 486 273 B2 ein Nagel zusammen mit einer einen randseitigen Kragen aufweisende Nagelführungshülse zur Verwendung in einem Bolzensetzgerät zur Befestigung eines Blechwinkels an einer Montagefläche beschrieben. Zur Befestigung dieses Winkels wird die Nagelführungshülse mit ihrem Kragen auf die Montagefläche aufgelegt und der Winkel mittels einer Öffnung über die Nagelführungshülse gestülpt. Anschließend wird der Nagel in die Nagelführungshülse eingeführt und mittels des Bolzensetzgerätes eingetrieben, wobei gleichzeitig der Hülsenabschnitt der Nagelführungshülse auf den Winkel kragenförmig gepresst wird.

Des Weiteren beschreibt die FR 2 610 375 A1 eine Nagelführungshülse mit einem randseitigen Kragen zur Befestigung einer Dämmplatte an einer Trägerwand, bspw. einer Betonwand mittels eines Nagels. Diese Nagelführungshülse wird zusammen mit dem Nagel mittels eines Bolzensetzgerätes derart in die Dämmplatte und die Trägerwand eingetrieben, dass die Nagelführungshülse zum einen mit dem Kragen auf der Dämmplatte und andererseits stirnseitig an der Trägerwand anliegt und der gegenüber der Nagelführungshülse längere Nagel in die Trägerwand eintaucht.

Schließlich ist aus der DE 43 39 840 A1 ein nagelförmiges Befestigungselement bekannt, dessen Schaft entlang eines Teils seiner Länge von einer längsgeschlitzten Hülse umgeben ist. Mittels eines solchen Befestigungselementes wird ein für Kabel vorgesehenes Halteteil aus Kunststoff, welches die Hülse umgibt, mittels eines Bolzensetzgerätes in harte Aufnahmematerialien, wie Beton, Mauerwerk usw. eingetrieben.

Aufgabe der Erfindung ist es daher, ein Verfahren der eingangs genannten Art derart weiterzuentwickeln, dass ein breites Anwendungsspektrum entsteht und insbesondere die genannten Nachteile vermieden werden, ohne dass die Herstellungskosten einer solchen Fügeverbindung wesentlich ansteigen.

Diese Aufgabe wird gelöst durch ein Verfahren mit den Merkmalen des Patentanspruchs 1.

Dieses Verfahren zur Herstellung einer Nagelverbindung zwischen wenigstens zwei Fügeteilen in einem Fügebereich mittels eines Nagels, der einen Nagelkopf, einen Nagelschaft und eine Nagelspitze aufweist, bei welchem der Nagel in die aufeinanderliegenden Fügeteile getrieben wird und die Nagelspitze beide Fügeteile unter plastischer Verformung des nagelkopfabgewandten Fügeteils im Fügebereich vollständig durchdringt, zeichnet sich erfindungsgemäß dadurch aus, dass das nagelkopfseitige Fügeteil aus einem spröden Werkstoff hergestellt wird, im Fügebereich wenigstens des nagelkopfseitigen Fügeteils eine Nagelführungshülse eingebracht und der Nagel in die Nagelführungshülse eingetrieben wird.

Mit diesem erfindungsgemäßen Verfahren können die Vorteile des Hochgeschwindigkeitsfügens, nämlich Einfachheit und Schnelligkeit, d. h. kurze Prozesszeiten auf solche Anwendungsfälle ausgedehnt werden, für die ansonsten dieses Verfahren nicht mehr anwendbar wäre.

Ein erster Anwendungsfall betrifft das Fügen eines Fügeteils aus faserverstärkten Kunststoff mit wenigstens einem metallischen, vorzugsweise ungelochten Fügeteil, bspw. aus Aluminium. Hierzu wird die Nagelführungshülse als Einlegeteil in das nagelkopfseitige Fügeteil, welches aus faserverstärkten Kunststoff besteht, eingebracht, vorzugsweise einlaminiert oder eingegossen. Ein solches Kunststoff-Fügeteil wird dann auf das wenigstens eine weitere Fügeteil aufgelegt und mit diesem durch Eintreiben des Nagels in die Nagelführungshülse und das wenigstens weitere Fügeteil mit demselben verbunden.

Mit einem solchen, vorzugsweise aus Metall hergestellten Einlegeteil in einem Kunststoff-Fügeteil werden die durch das Zerschneiden der Fasern des Kunststoffs hervorgerufenen Nachteile beseitigt, die ansonsten bei direktem Eintreiben des Nagels in ein solches Fügeteil aus Kunststoff auftreten würden. Durch das Einbringen einer solchen Nagelführungshülse als Einlegeteil in den Kunststoff des Fügeteils verlaufen Fasern um dieses Einlegeteil herum, so dass durch das Eintreiben des Nagels durch diese Nagelführungshülse die Fasern nicht mehr zerstört werden können. Damit können Fügeteile sowohl aus spröden Kunststoffen als auch aus Gusswerkstoffen mit diesem erfindungsgemäßen Verfahren gefügt werden, ohne dass eine Schwächung des Fügeteils im Fügebereich auftritt und damit deren Eigenschaften erhalten bleiben und eine hohe Verbindungsfestigkeit erzielt wird.

In einer Ausgestaltung der Erfindung kann das Einlegeteil mit einem gegenüber dem Schaftdurchmesser des Nagels geringeren Innendurchmesser ausgebildet werden, so dass durch das Eintreiben des Nagels dieses Einlegeteil aufgeweitet wird, wodurch eine hohe Klemmwirkung entsteht.

Gemäß einer anderen Ausgestaltung der Erfindung kann das Einlegeteil einen Innendurchmesser aufweisen, der dem Schaftdurchmesser entspricht oder geringfügig größer als der Schaftdurchmesser ist, wodurch das Kunststoff-Fügeteil zwischen dem Nagelkopf und dem wenigstens einen nagelkopfabgewandten Fügeteil eingeklemmt wird.

Besonders vorteilhaft ist es gemäß einer Weiterbildung der Erfindung, wenn diese Nagelführungshülse als Einlegeteil sowohl an ihrem nagelkopfseitigen Ende als auch an ihrem nagelkopfabgewandten Ende einen radial überstehenden und auf dem Fügeteil aufliegenden Kragen in der Art eines Flachkopfes aufweist. Damit wird eine sichere Verankerung einer solchen Nagelführungshülse in dem Kunststoff-Fügeteil erreicht.

Bei einer anderen als Einlegeteil ausgebildeten Nagelführungshülse sind deren beiden Ende senkkopfartig derart ausgebildet, dass die Stirnflächen der Nagelführungshülsen mit den Oberflächen des Kunststoff-Fügeteils eine Ebene bilden, also nicht überstehen.

Bei einem weiteren Anwendungsfall werden Deckbleche für die Fahrzeugkarosserie bereits mit Vorlöchern versehen, um darüber bspw. mittels selbstfurchenden Schrauben solche Deckbleche mit weiteren, vorzugsweise ungelochten Fügeteilen zu verbinden. Solche vorgelochten Deckbleche mittels dem Hochgeschwindigkeitsfügen mit anderen Fügeteilen zu fügen, scheitert jedoch oft an dem zu großen Durchmesser des Vorloches. Bei solchen zu großen Vorlöchern besteht die Gefahr von Korrosion, da aufgrund einer mangelnden Überdeckung des Vorloches durch den Nagelkopf Feuchtigkeit oder Nässe in die Fügeverbindung eintreten kann.

Durch das Einbringen der erfindungsgemäßen, vorzugsweise aus Metall oder Kunststoff hergestellten Nagelführungshülse in das nagelkopfseitige Fügeteil, vorzugsweise in dessen Vorloch, wird der Durchmesser des Vorloches im nagelkopfseitigen Fügeteil reduziert, wodurch das Hochgeschwindigkeitsfügen mittels eines in diese Nagelführungshülse eingetriebenen Nagels möglich ist. Damit können vorgelochte, nagelkopfseitige Fügeteile aus spröden Kunstwerkstoffen oder aus Gusswerkstoffen gefügt werden.

Auch bei dieser das Vorloch verkleinernde Nagelführungshülse kann deren Innendurchmesser kleiner als der Schaftdurchmesser des Nagels oder dem Schaftdurchmesser entsprechen bzw. geringfügig größer sein. Im ersten Fall wird die Nagelführungshülse beim Eintreiben des Nagels verformt und stark im nagelkopfzugewandten Fügeteil eingeklemmt, wogegen im anderen Fall lediglich das nagelkopfseitige Fügeteil zwischen dem Nagelkopf und dem nagelkopfabgewandten Fügeteil eingeklemmt wird.

Besonders vorteilhaft ist es, wenn eine solche Nagelführungshülse an ihrem nagelkopfseitigen Ende einen radial überstehenden Kragen in der Art eines Flachkopfes aufweist, der auf dem nagelkopfseitigen Fügeteil aufliegt. Damit kann eine solche Nagelführungshülse bei entsprechender Abstimmung der beteiligten Durchmesser in das Vorloch eingepresst werden, bis dieser Kragen auf der Oberfläche des Fügeteils aufliegt.

Schließlich bietet sich das erfindungsgemäße Verfahren als Reparaturverfahren an, indem nach dem Lösen einer Schraub- oder Nietverbindung zwischen wenigstens zwei Fügeteilen in diesen ein Vorloch verbleibt und eine über die Höhe der aufeinanderliegenden Fügeteile sich erstreckende, vorzugsweise aus Metall oder Kunststoff hergestellte Nagelführungshülse in die fluchtenden Vorlöcher eingeführt wird, wodurch der Durchmesser der Vorlöcher reduziert wird und daher das Hochgeschwindigkeitsfügen durchführbar ist. Anschließend wird der Nagel in diese Nagelführungshülse eingetrieben, deren Innendurchmesser kleiner als der Schaftdurchmesser des Nagelschaftes ist, wodurch sich diese verformt und in den beiden zu fügenden Fügeteilen verklemmt.

Besonders vorteilhaft ist es, diese Nagelführungshülse an ihrem nagelkopfseitigen Ende mit einem radial überstehenden Kragen auszubilden, so dass diese Nagelführungshülse nagelkopfseitig in beide Vorlöcher einführbar ist, bis der Kragen auf dem nagelkopfseitigen Fügeteil aufliegt. Bei einer anderen Ausgestaltung einer solchen Nagelführungshülse ist ein solcher überstehender Kragen an ihrem nagelkopfabgewandten Ende vorgesehen. Eine solche Nagelführungshülse wird von der nagelkopfabgewandten Seite in die beiden Vorlöcher eingeführt und muss beim Hochgeschwindigkeitsfügen mittels einer Lochmatrize abgestützt werden.

Die Erfindung wird nachfolgend anhand von Ausführungsbeispielen unter Bezugnahme auf die beigefügten Figuren ausführlich beschrieben. Es zeigen:
- Figur 1: eine schematische Schnittdarstellung eines Kunststoff-Fügeteils mit einer erfindungsgemäßen Nagelführungshülse,
- Figur 2: eine schematische Schnittdarstellung eines Kunststoff-Fügeteils gemäß Figur 1 mit einer alternativen Ausführung einer erfindungsgemäßen Nagelführungshülse,
- Figuren 3-5: schematische Schnittdarstellungen von Verfahrensschritten als erstes Ausführungsbeispiel des erfindungsgemäßen Verfahrens,
- Figur 6: eine schematische Schnittdarstellung des Verfahrensschrittes nach Figur 5 mit einer alternativen Ausführung einer Nagelführungshülse,
- Figuren 7- 9: schematische Schnittdarstellungen von Verfahrensschritten als zweites Ausführungsbeispiel des erfindungsgemäßen Verfahrens,
- Figur 10: eine schematische Schnittdarstellung des Verfahrensschrittes nach Figur 9 mit einer alternativen Ausführung einer Nagelführungshülse,
- Figuren 11-13: schematische Schnittdarstellungen von Verfahrensschritten als drittes Ausführungsbeispiel des erfindungsgemäßen Verfahrens, und
- Figuren 14 -16: schematische Schnittdarstellungen der Verfahrensschritte nach den Figuren 11 bis 13 mit einer alternativen Ausführungsform einer Nagelführungshülse.

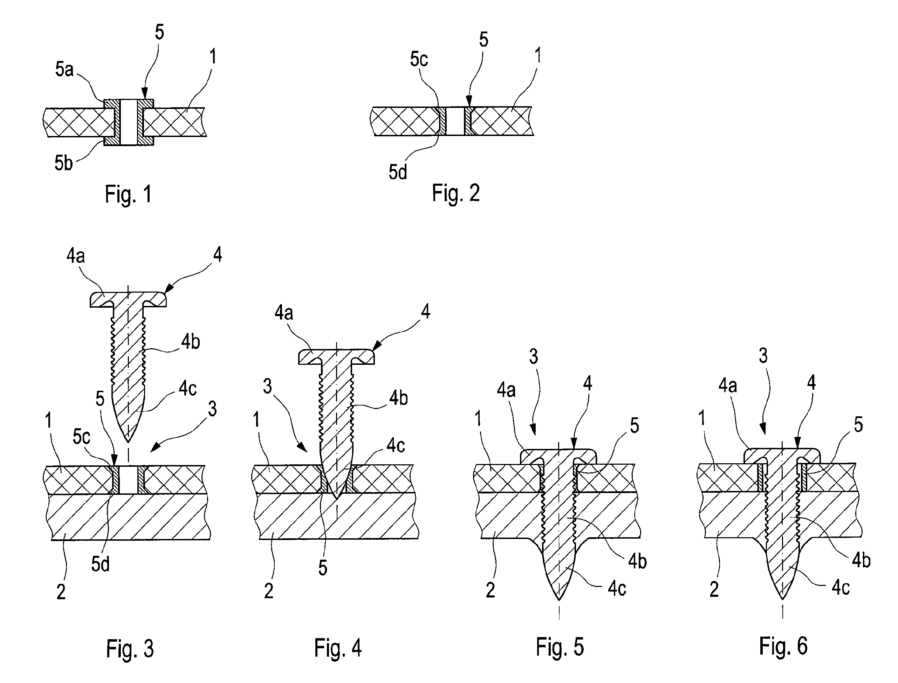

Die Figuren 1 bis 6 beschreiben die erfindungsgemäße Herstellung einer Nagelverbindung von zwei zu fügenden Fügeteilen 1 und 2 mittels eines Nagels 4, der gemäß des bekannten Hochgeschwindigkeitsfügens in einen Fügebereich 3 dieser beiden Fügeteile 1 und 2 getrieben wird. Dieses Verfahren ist besonders für Fügeteile geeignet, die aus einem faserverstärkten Kunststoff bestehen und das nagelkopfseitige Fügeteil 1 bilden (vgl. Figuren 3 bis 6) und nachfolgend auch als Kunststoff-Fügeteil 1 bezeichnet wird. Der zweite Fügepartner stellt in der Regel ein Fügeteil 2 aus einem Stahl- oder Aluminiumwerkstoff dar.

Die Fügeverbindung zwischen solchen Fügeteilen 1 und 2 wird mittels eines in dem Kunststoff-Fügeteil 1 gemäß den Figuren 1 und 2 eingebrachten Nagelführungshülse 5 hergestellt. Eine solche aus Metall hergestellte Nagelführungshülse 5 wird als Einlegeteil bzw. Inlay bereits bei der Herstellung dieses Kunststoff-Fügeteile 1 einlaminiert oder eingegossen. Die Figuren 1 und 2 zeigen zwei Ausführungen einer solchen Nagelführungshülse 5.

Die Nagelführungshülse 5 gemäß Figur 1 ist an ihren beiden Stirnseiten jeweils mit einem radial umlaufenden Kragen 5a und 5b in der Art eines Flachkopfes ausgebildet, der jeweils flächig auf der Oberfläche des Fügeteils 1 aufliegt.

Die Nagelführungshülse 5 gemäß Figur 2 ist demgegenüber mit senkkopfartigen Enden 5c und 5d ausgebildet, so dass die Stirnflächen jeweils mit den Oberflächen des Fügeteils 1 fluchten, also nicht über die jeweilige Oberfläche überstehen.

Zur Herstellung der Nagelverbindung wird ein solches Kunststoff-Fügeteil 1 auf das ungelochte Fügeteil 2 als Fügepartner aufgelegt, wie dies in Figur 3 dargestellt ist. Dabei entspricht die Nagelführungshülse 5 der Ausführung gemäß Figur 2. Der Innendurchmesser der Nagelführungshülse 5 ist kleiner als der Durchmesser des Nagelschaftes 4b.

Der in den Fügebereich 3 durch die Nagelführungshülse 5 und das Fügeteil 2 einzutreibende Nagel 4 umfasst einen Nagelkopf 4a, einen eine Oberflächenprofilierung aufweisenden Nagelschaft 4b sowie eine Nagelspitze 4c.

Der Eintreibvorgang gemäß Figur 4 zeigt den Zustand des Nagels 4, bei dem dessen Nagelspitze 4c bereits in die Nagelführungshülse 5 eingeführt ist und das weitere Fügeteil 2 zu durchdringen beginnt. Gemäß Figur 5 ist der Eintreibvorgang beendet, d. h. die Nagelspitze 4c ist unter Bildung eines Materialaufwurfes auf der Unterseite des Fügeteils 2 ausgetreten und die Unterseite des Nagelkopfes 4a liegt auf der Oberseite des Kunststoff-Fügeteils 1. Da der Innendurchmesser der Nagelführungshülse 5 kleiner als der Durchmesser des Nagelschaftes 5b ist, wird bei diesem Eintreibvorgang die Nagelführungshülse 5 aufgeweitet, wodurch eine hohe Klemmwirkung entsteht.

Die Figur 6 zeigt eine Nagelverbindung entsprechend dem Zustand nach Figur 5, jedoch mit einer Nagelführungshülse 5, deren Innendurchmesser geringfügig größer als der Durchmesser des Nagelschaftes 4b ist. Dies hat zur Folge, dass das Kunststoff-Fügeteil 1 zwischen dem Nagelkopf 4a und dem weiteren Fügeteil 2 eingeklemmt wird.

Durch diese Einbettung der Nagelführungshülse 5 in den faserverstärkten Kunststoff des Fügeteils 1 bleiben die Eigenschaften hinsichtlich ihrer Festigkeit nach dem Fügen erhalten, da die Fasern nicht zerschnitten bzw. zerstört werden, wie dies bei einem Eintreiben des Nagels ohne die erfindungsgemäße Nagelführungshülse 5 der Fall wäre.

Als Werkstoffe für die weiteren Fügepartner 2 können nicht nur Leichtmetalle eingesetzt werden, sondern auch Kunststoffe, soweit sie nicht faserverstärkt sind.

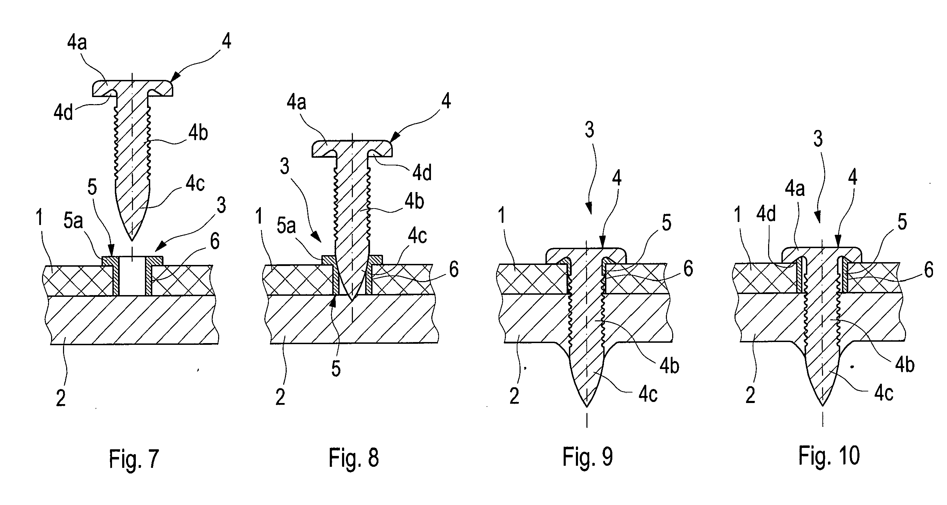

Die Figuren 7 bis 10 zeigen das erfindungsgemäße Verfahren, bei dem das Fügeteil 1 bereits ein Vorloch 6 aufweist. In vielen Fällen werden im Karosseriebau Deckbleche verwendet, die fertigungsbedingt Vorlöcher aufweisen, so dass diese bspw. mittels selbstfurchenden Schrauben an ein weiteres Fügeteil angeschraubt werden können. Aufgrund der geringeren Prozesszeit wäre es in vielen Fällen hilfreich, solche Fügepunkte mittels des Hochgeschwindigkeitsfügen herzustellen, jedoch aufgrund der oftmals zu großen Durchmesser dieser Vorlöcher nicht anwendbar ist.

In solchen Fällen wird daher erfindungsgemäß zur Verkleinerung des Durchmessers des Vorloches 6 eine Nagelführungshülse 5 als Einsatzteil in ein solches Vorloch 6 des Fügeteils 1 eingebracht, auf das ungelochte Fügeteil 2 als weiteren Fügepartner aufgelegt und in einem Fügebereich 3 mittels eines Nagels 4 die Fügeverbindung hergestellt, wie dies in den Figuren 7 bis 10 dargestellt ist. Der Außendurchmesser der Nagelführungshülse 5 entspricht dabei dem Durchmesser des Vorlochs 6, wobei der Innendurchmesser kleiner als der Durchmesser des Nagelschaftes 4b ist.

Die aus Kunststoff oder Metall hergestellte Nagelführungshülse 5 ist gemäß Figur 7 an ihrer nagelkopfseitigen Stirnseite mit einem radial umlaufenden Kragen 5a in der Art eines Flachkopfes ausgebildet, so dass diese Nagelführungshülse 5 in das Vorloch 6 des Fügeteils 1 eingedrückt bzw. eigepresst werden kann, bis dieser Kragen 5a flächig auf der Oberfläche des Fügeteils 1 aufliegt. Die gegenüberliegende Stirnfläche der Nagelführungshülse 5 fluchtet mit der nagelfkopfabgewandten Oberfläche des Fügeteils 1, so dass die beiden Fügeteile 1 und 2 flächig aneinander liegen.

Der in den Fügebereich 3 durch die Nagelführungshülse 5 und das Fügeteil 2 einzutreibende Nagel 4 umfasst gemäß Figur 7 einen Nagelkopf 4a, einen eine Oberflächenprofilierung aufweisenden Nagelschaft 4b sowie eine Nagelspitze 4c. Auf der Unterseite des Nagelkopfes 4a ist eine den Nagelschaft 4b umlaufende Ringnut 4d vorgesehen.

Der Eintreibvorgang gemäß Figur 8 zeigt im Rahmen des Hochgeschwindigkeitsfügens den Zustand des Nagels 4, bei dem dessen Nagelspitze 4c bereits in die Nagelführungshülse 5 eingeführt ist und die Nagelspitze 4c das zweite Fügeteil 2 zu durchdringen beginnt. Gemäß Figur 9 ist der Eintreibvorgang beendet, d. h. die Nagelspitze 4c ist unter Bildung eines Materialaufwurfes auf der Unterseite des Fügeteils 2 ausgetreten und die Unterseite des Nagelkopfes 4a liegt auf der Oberseite des Fügeteils 1, wobei durch den Kragen 5a der Nagelführungshülse 5 ein Materialaufwurf gebildet wird, der von der Ringnut 4d auf der Unterseite des Nagelkopfes 4a aufgenommen wird. Da der Innendurchmesser der Nagelführungshülse 5 kleiner als der Durchmesser des Nagelschaftes 4b ist, wird bei diesem Eintreibvorgang die Nagelführungshülse 5 aufgeweitet, wodurch eine hohe Klemmwirkung entsteht.

Die Figur 10 zeigt eine Nagelverbindung entsprechend dem Zustand nach Figur 9, jedoch mit einer Nagelführungshülse 5, deren Innendurchmesser geringfügig größer als der Durchmesser des Nagelschaftes 4b ist. Dies hat zur Folge, dass das Kunststoff-Fügeteil 1 zwischen dem Nagelkopf 4a und dem weiteren Fügeteil 2 eingeklemmt wird. Auch in dieser Situation wird ein Teil des Kragens 5a von der Ringnut 4d des Nagelkopfes 4a aufgenommen, wenn die Unterseite des Nagelkopfes 4a vollständig auf der Oberfläche des Fügeteils 1 aufliegt.

Bei einer Verwendung einer aus Kunststoff gefertigten Nagelführungshülse 5 wird die Fügestelle gegen das Eindringen von Feuchtigkeit und Nässe abgedichtet und dadurch ein wirksamer Korrosionsschutz erzielt.

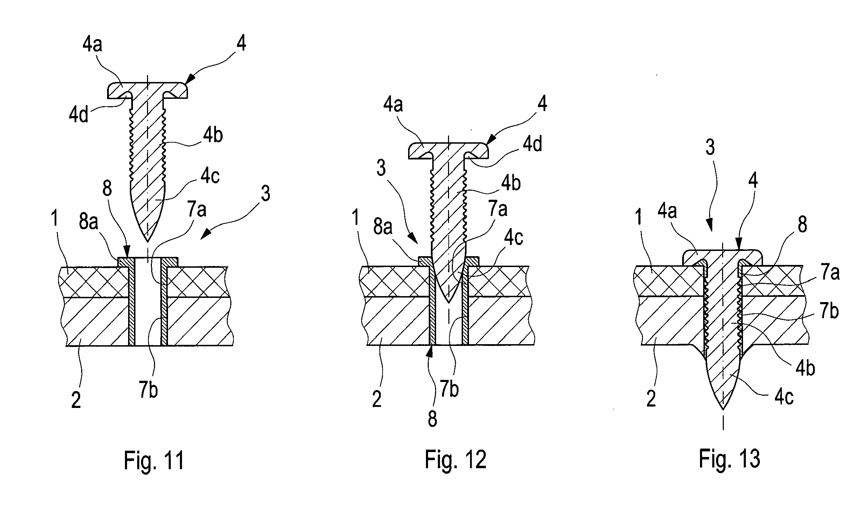

Mit der Verwendung der erfindungsgemäßen Nagelführungshülse lässt sich eine besonders einfache Reparatur einer Fügeverbindung von wenigstens zwei Fügeteilen durchführen, wie im Folgenden anhand der Figuren 11 bis 16 erläutert wird.

Die Reparatur einer bspw. mittels einer Schraube oder einem Niet erzeugten Nietverbindung beginnt damit, dass das Verbindungsmittel, also die Schraube oder der Niet aus den beiden gefügten Fügeteilen entfernt werden muss, wodurch jeweils ein Vorloch in diesen beiden Fügeteilen entsteht. Vor der Herstellung einer neuen Fügeverbindung mittels eines Nagels müssen ggf. diese Vorlöcher sauber aufgebohrt werden, bevor eine erfindungsgemäße Nagelführungshülse in die fluchtende Vorlöcher eingeführt werden kann.

Figur 11 zeigt diese Situation, bei der zwei fluchtende Vorlöcher 7a und 7b in einem Fügeteil 1 und einem Fügeteil 2 eine Nagelführungshülse 8 als Einsatzteil aufnehmen, wobei sich diese Nagelführungshülse 8 über beide flächig aufeinanderliegenden Fügeteile 1 und 2 erstreckt und einen Außendurchmesser aufweist, der dem Durchmesser der beiden Vorlöcher 7a und 7b entspricht.

Der in den Fügebereich 3 durch die Nagelführungshülse 8 und das Fügeteil 2 einzutreibende Nagel 4 umfasst gemäß Figur 11 einen Nagelkopf 4a, einen eine Oberflächenprofilierung aufweisenden Nagelschaft 4b sowie eine Nagelspitze 4c. Auf der Unterseite des Nagelkopfes 4a ist eine den Nagelschaft 4b umlaufende Ringnut 4d vorgesehen. Der Innendurchmesser der Nagelführungshülse 8 ist kleiner als der Durchmesser des Nagelschaftes 4b.

Die aus Kunststoff oder weichem Metall hergestellte Nagelführungshülse 8 ist gemäß Figur 11 an ihrer nagelkopfseitigen Stirnseite mit einem radial umlaufenden Kragen 8a in der Art eines Flachkopfes ausgebildet, so dass diese Nagelführungshülse 5 in die beiden Vorlöcher 7a und 7b der beiden Fügeteile 1 und 2 eingedrückt bzw. eigepresst werden kann, bis dieser Kragen 8a flächig auf der Oberfläche des Fügeteils 1 aufliegt. Die gegenüberliegende Stirnfläche der Nagelführungshülse 5 fluchtet mit der unteren Oberfläche des nagelkopfabgewandten Fügeteils 2.

Der Eintreibvorgang gemäß Figur 12 zeigt im Rahmen des Hochgeschwindigkeitsfügens den Zustand des Nagels 4, bei dem dessen Nagelspitze 4c bereits teilweise in die Nagelführungshülse 8 eingeführt ist. Gemäß Figur 13 ist der Eintreibvorgang beendet, d. h. die Nagelspitze 4c ist unter Bildung eines Materialaufwurfes auf der Unterseite des Fügeteils 2 ausgetreten und die Unterseite des Nagelkopfes 4a liegt auf der Oberseite des Fügeteils 1, wobei durch den Kragen 8a der Nagelführungshülse 8 ein Materialaufwurf gebildet wird, der von der Ringnut 4d auf der Unterseite des Nagelkopfes 4a aufgenommen wird. Da der Innendurchmesser der Nagelführungshülse 8 kleiner als der Durchmesser des Nagelschaftes 4b ist, wird bei diesem Eintreibvorgang die Nagelführungshülse 8 aufgeweitet und an die Lochwandung des Vorloches 7a bzw. 7b gepresst, wodurch die Verbindungsfestigkeit erzielt wird.

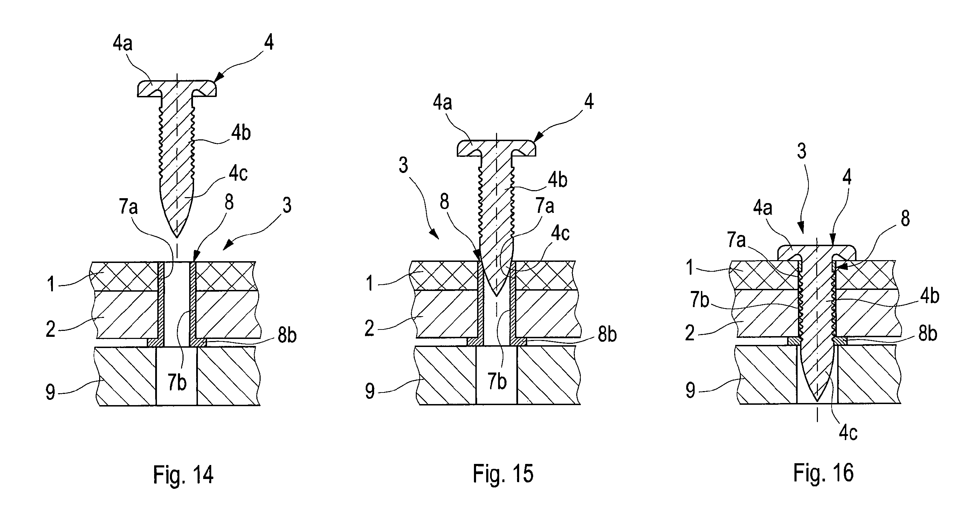

Gemäß den Figuren 14 bis 16 kann die Nagelführungshülse 8 auch von unten, d. h. von der Unterseite des nagelkopfabgewandten Fügeteils 2 in das Vorloch 7b eingeführt werden so dass dessen Kragen 8b auf der Unterseite des nagelkopfabgewandten Fügeteils 2 aufliegt und die gegenüberliegende Stirnseite der Nagelführungshülse 8 mit der Oberfläche des nagelkopfseitigen Fügeteils 1 fluchtet.

In diesem Fall muss jedoch diese Nagelführungshülse 8 von unten durch eine Lochmatrize 9 abgestützt werden, d. h. der umlaufende Kragen 8a liegt auf dem Rand der Lochmatrize 9 auf. Die dargestellten Verfahrensschritte nach Figur 15 und Figur 16 entsprechen denjenigen nach Figur 12 und Figur 13. Im eingetriebenen Zustand des Nagels 4 gemäß Figur 16 entsteht auf der Oberseite des Fügeteils 1 kein Materialaufwurf, da dort kein Kragen vorhanden ist. Auf der Unterseite an der Austrittsstelle der Nagelspitze 4c entsteht im Wesentlichen ebenfalls kein Materialaufwurf, da der Kragen fast vollständig von der Lochmatrize 9 abgestützt wird und die Nagelspitze 4c in die Öffnung der Lochmatrize 9 ragt. Auch in diesem Fall wird die Nagelführungshülse 8 aufgeweitet und an die Lochwandung der Vorlöcher 7a und 7b gepresst, wodurch die Verbindungsfestigkeit erzielt wird.

Der in den Figuren 11 bis 16 verwendet Nagel 4 kann auch mit einer stumpfen Spitze, also im Wesentlichen ohne Nagelspitze ausgeführt werden, da bereits ein Vorloch in beiden Fügeteilen 1 und 2 vorhanden ist. Dies bietet den Vorteil, dass die Nagelspitze auf der Unterseite des Fügeteils 2 nicht so weit übersteht.

In den Ausführungsbeispielen wird das nagelkopfseitige Fügeteil 1 mit einem einzigen Fügeteil 2 als weiteren Fügepartner verbunden. Natürlich kann die Erfindung auch mit mehr als nur einem einzigen weiteren Fügepartner durchgeführt werden.

### Bezugszeichen

- 1: Fügeteil
- 2: Fügeteil
- 3: Fügebereich
- 4: Nagel
- 4a: Nagelkopf
- 4b: Nagelschaft
- 4c: Nagelspitze
- 4d: Ringnut auf der Unterseite des Nagelkopfes 4a
- 5: Nagelführungshülse
- 5a: Kragen an der Nagelführungshülse 5
- 5b: Kragen an der Nagelführungshülse 5
- 5c: senkkopfartiges Ende der Nagelführungshülse 5
- 5d: senkkopfartiges Ende der Nagelführungshülse 5
- 6: Vorloch im Fügeteil 1
- 7a: Vorloch in Fügeteil 1
- 7b: Vorloch in Fügeteil 2
- 8: Nagelführungshülse
- 8a: Kragen am nagelkopfseitigen Ende der Nagelführungshülse 8
- 8b: Kragen am nagelkopfabgewandten Ende der Nagelführungshülse 8
- 9: Lochmatrize

## Patentansprüche

1. Verfahren zur Herstellung einer Nagelverbindung zwischen wenigstens zwei Fügeteilen (1, 2) in einem Fügebereich (3) mittels eines Nagels (4), der einen Nagelkopf (4a), einen Nagelschaft (4b) und eine Nagelspitze (4c) aufweist, bei welchem der Nagel (4) in die aufeinanderliegenden Fügeteile (1, 2) getrieben wird und die Nagelspitze (4c) beide Fügeteile (1, 2) unter plastischer Verformung des nagelkopfabgewandten Fügeteils (2) im Fügebereich (3) vollständig durchdringt,
**dadurch gekennzeichnet, dass**
- das nagelkopfseitige Fügeteil (1) aus einem spröden Werkstoff hergestellt wird,
- im Fügebereich (3) wenigstens des nagelkopfseitigen Fügeteils (1) eine Nagelführungshülse (5, 8) eingebracht wird, und
- der Nagel (4) in die Nagelführungshülse (5, 8) eingetrieben wird.

2. Verfahren nach Anspruch 1,
**dadurch gekennzeichnet, dass** der Innendurchmesser der Nagelführungshülse (5, 8) kleiner als der Durchmesser des Nagelschaftes (4b) ist.

3. Verfahren nach Anspruch 1,
**dadurch gekennzeichnet, dass** der Innendurchmesser der Nagelführungshülse (5) dem Durchmesser des Nagelschaftes (4b) entspricht oder größer als derselbe ist.

4. Verfahren nach einem der vorhergehenden Ansprüche,
**dadurch gekennzeichnet, dass** die Nagelführungshülse (5) an ihrem nagelkopfseitigen Ende einen radial überstehenden Kragen (5a) aufweist, der auf dem nagelkopfseitigen Fügeteil (1) aufliegt.

5. Verfahren nach einem der vorhergehenden Ansprüche,
**dadurch gekennzeichnet, dass** die Nagelführungshülse (5) an ihrem nagelkopfabgewandten Ende einen radial überstehenden Kragen (5b) aufweist, der auf dem nagelkopfseitigen Fügeteil (1) aufliegt.

6. Verfahren nach einem der Ansprüche 1 bis 3,
**dadurch gekennzeichnet, dass** die Nagelführungshülse (5) wenigstens nagelkopfseitig ein senkkopfartiges Ende (5c, 5d) aufweist.

7. Verfahren nach einem der vorhergehenden Ansprüche,
**dadurch gekennzeichnet, dass** die Nagelverbindung mit einem ungelochten nagelkopfabgewandten Fügeteil (2) hergestellt wird.

8. Verfahren nach einem der vorhergehenden Ansprüche,
**dadurch gekennzeichnet, dass** die Nagelverbindung mit einem nagelkopfseitigen Fügeteil (1) aus faserverstärkten Kunststoff hergestellt wird.

9. Verfahren nach Anspruch 8,
**dadurch gekennzeichnet, dass** die Nagelführungshülse (5) als Einlegeteil bei der Herstellung des nagelkopfseitigen Fügeteils (1) in dieses Fügeteil (1) einlaminiert oder eingegossen wird.

10. Verfahren nach einem der Ansprüche 1 bis 7,
**dadurch gekennzeichnet, dass** in dem nagelkopfseitigen Fügeteil (1) zum Einführen der Nagelführungshülse (5) ein Vorloch (6) erzeugt wird.

11. Verfahren nach Anspruch 10,
**dadurch gekennzeichnet, dass** der Durchmesser des Vorlochs (6) und der Außendurchmesser der Nagelführungshülse (5) derart abgestimmt sind, dass die Nagelführungshülse (5) in das Vorloch (6) einpressbar ist.

12. Verfahren nach einem der Ansprüche 1 oder 2,
**dadurch gekennzeichnet, dass**
- im Fügebereich (3) der zu fügenden Fügeteile (1, 2) jeweils ein Vorloch (7a, 7b) erzeugt wird, und
- eine über die Höhe der aufeinanderliegenden Fügeteile (1, 2) sich erstreckende Nagelführungshülse (8) in die fluchtenden Vorlöcher (7a, 7b) eingeführt wird, wobei der Außendurchmesser der Nagelführungshülse (8) dem Durchmesser der Vorlöcher (7a, 7b) im Wesentlichen entspricht.

13. Verfahren nach Anspruch 12,
**dadurch gekennzeichnet, dass** die Nagelführungshülse (8) an ihrem nagelkopfseitigen Ende einen radial überstehenden Kragen (8a) aufweist, der auf dem nagelkopfseitigen Fügeteil (1) aufliegt.

14. Verfahren nach Anspruch 12,
**dadurch gekennzeichnet, dass** die die Nagelführungshülse (8) an ihrem nagelkopfabgewandten Ende einen radial überstehenden Kragen (8b) aufweist, der auf dem nagelkopfabgewandten Fügeteil (2) aufliegt.

## Claims

1. Method for producing a nail connection at a juncture (3) between at least two parts being joined (1, 2), by means of a nail (4) comprising a nail head (4a), a nail shaft (4b) and a nail tip (4c), the nail (4) being driven into the superposed parts being joined (1, 2) and the nail tip (4c) fully penetrating the two parts being joined (1, 2) with plastic deformation, at the juncture (3), of the part being joined (2) that is remote from the nail head,
**characterised in that**
- the part being joined (1) that is on the nail-head side is produced from a brittle material,
- a nail guiding sleeve (5, 8) is installed at the juncture (3) of at least the part being joined (1) that is on the nail-head side, and
- the nail (4) is driven into the nail guiding sleeve (5, 8).

2. Method according to claim 1,
**characterised in that** the internal diameter of the nail guiding sleeve (5, 8) is smaller than the diameter of the nail shaft (4b).

3. Method according to claim 1,
**characterised in that** the internal diameter of the nail guiding sleeve (5) either corresponds to or is larger than the diameter of the nail shaft (4b).

4. Method according to any of the preceding claims,
**characterised in that** the nail guiding sleeve (5) comprises a radially projecting collar (5a) at its end on the nail-head side, which collar rests on the part being joined (1) that is on the nail-head side.

5. Method according to any of the preceding claims,
**characterised in that** the nail guiding sleeve (5) comprises a radially projecting collar (5b) at its end that is remote from the nail head, which collar rests on the part being joined (1) that is on the nail-head side.

6. Method according to any of claims 1 to 3,
**characterised in that** the nail guiding sleeve (5) comprises at least one countersunk-head-type end (5c, 5d) on the nail-head side.

7. Method according to any of the preceding claims,
**characterised in that** the nail connection is produced using an unperforated part being joined (2) that is remote from the nail head.

8. Method according to any of the preceding claims,
**characterised in that** the nail connection is produced using a part being joined (1) that is on the nail-head side made of fibre-reinforced plastics material.

9. Method according to claim 8,
**characterised in that** the nail guiding sleeve (5) is laminated or cast integrally into the part being joined (1) that is on the nail-head side as an insert when producing said part being joined (1).

10. Method according to any of claims 1 to 7,
**characterised in that** a pre-piercing (6) is created in the part being joined (1) that is on the nail-head side for insertion of the nail guiding sleeve (5).

11. Method according to claim 10,
**characterised in that** the diameter of the pre-piercing (6) and the outer diameter of the nail guiding sleeve (5) match such that the nail guiding sleeve (5) can be pressed into the pre-piercing (6).

12. Method according to either claim 1 or claim 2,
**characterised in that**
- a pre-piercing (7a, 7b) is created at the juncture (3) of each of the parts to be joined (1, 2), and
- a nail guiding sleeve (8) that extends over the height of the superposed parts being joined (1, 2) is inserted into the aligned pre-piercings (7a, 7b), the outer diameter of the nail guiding sleeve (8) corresponding substantially to the diameter of the pre-piercings (7a, 7b).

13. Method according to claim 12,
**characterised in that** the nail guiding sleeve (8) comprises a radially projecting collar (8a) at its end on the nail-head side, which collar rests on the part being joined (1) that is on the nail-head side.

14. Method according to claim 12,
**characterised in that** the nail guiding sleeve (8) comprises a radially projecting collar (8b) at its end that is remote from the nail head, which collar rests on the part being joined (2) that is remote from the nail head.

## Revendications

1. Procédé de fabrication d'une liaison par clous entre au moins deux éléments d'assemblage (1, 2) dans une zone d'assemblage (3) à l'aide d'un clou (4) qui présente une tête de clou (4a), une tige de clou (4b) et une pointe de clou (4c), dans le cadre duquel le clou (4) est enfoncé dans les éléments d'assemblage (1, 2) posés l'un sur l'autre et la pointe de clou (4c) pénètre complètement les deux éléments d'assemblage (1, 2) sous déformation plastique de l'élément d'assemblage (2) éloigné de la tête de clou dans la zone d'assemblage (3),
**caractérisé en ce que**
- l'élément d'assemblage (1) côté tête de clou est fabriqué en un matériau friable,
- une douille de guidage de clou (5, 8) est introduite dans la zone d'assemblage (3) au moins de l'élément d'assemblage (1) côté tête de clou, et
- le clou (4) est enfoncé dans la douille de guidage de clou (5, 8).

2. Procédé selon la revendication 1,
**caractérisé en ce que** le diamètre intérieur de la douille de guidage de clou (5, 8) est inférieur au diamètre de la tige de clou (4b).

3. Procédé selon la revendication 1,
**caractérisé en ce que** le diamètre intérieur de la douille de guidage de clou (5) correspond au diamètre de la tige de clou (4b) ou est supérieur à celui-ci.

4. Procédé selon l'une quelconque des revendications précédentes,
**caractérisé en ce que** la douille de guidage de clou (5) présente sur son extrémité côté tête de clou un collet (5a) dépassant radialement qui repose sur l'élément d'assemblage (1) côté tête de clou.

5. Procédé selon l'une quelconque des revendications précédentes,
**caractérisé en ce que** la douille de guidage de clou (5) présente sur son extrémité éloignée de la tête de clou un collet dépassant radialement (5b) qui repose sur l'élément d'assemblag.e.(1) côté tête de clou.

6. Procédé selon l'une quelconque des revendications 1 à 3,
**caractérisé en ce que** la douille de guidage de clou (5) présente au moins côté tête de clou une extrémité de type tête fraisée (5c, 5d).

7. Procédé selon l'une quelconque des revendications précédentes,
**caractérisé en ce que** la liaison par clous est fabriquée avec un élément d'assemblage (2) éloigné de la tête de clou non percé.

8. Procédé selon l'une quelconque des revendications précédentes,
**caractérisé en ce que** la liaison par clous est fabriquée avec un élément d'assemblage côté tête de clou (1) en un matériau plastique renforcé par des fibres.

9. Procédé selon la revendication 8,
**caractérisé en ce que** la douille de guidage de clou (5) est laminée ou moulée par injection comme pièce d'insertion lors de la fabrication de l'élément d'assemblage (1) côté tête de clou dans cet élément d'assemblage (1).

10. Procédé selon l'une quelconque des revendications 1 à 7,
**caractérisé en ce qu'**un prétrou (6) est généré dans l'élément d'assemblage (1) côté tête de clou pour l'introduction de la douille de guidage de clou (5).

11. Procédé selon la revendication 10,
**caractérisé en ce que** le diamètre du prétrou (6) et le diamètre extérieur de la douille de guidage de clou (5) sont adaptés de telle manière que la douille de guidage de clou (5) puisse être enfoncée dans le prétrou (6).

12. Procédé selon l'une quelconque des revendications 1 ou 2,
**caractérisé en ce que**
- respectivement un prétrou (7a, 7b) est généré dans la zone d'assemblage (3) des éléments d'assemblage (1, 2) à assembler, et
- une douille de guidage de clou (8) s'étendant sur la hauteur des éléments d'assemblage (1, 2) posés l'un sur l'autre est introduite dans les prétrous (7a, 7b) alignés, le diamètre extérieur de la douille de guidage de clou (8) correspondant sensiblement au diamètre des prétrous (7a, 7b).

13. Procédé selon la revendication 12,
**caractérisé en ce que** la douille de guidage de clou (8) présente sur son extrémité côté tête de clou un collet dépassant radialement (8a) qui repose sur l'élément d'assemblage (1) côté tête de clou.

14. Procédé selon la revendication 12,
**caractérisé en ce que** la douille de guidage de clou (8) présente sur son extrémité éloignée de la tête de clou un collet (8b) dépassant radialement qui repose sur l'élément d'assemblage (2) éloigné de la tête de clou.
